# FASCICULE DE BREVET EUROPEEN

(11) **EP 4 048 996 B1**
(45) Date de publication et mention de la délivrance du brevet: **08.10.2025**
(21) Numéro de dépôt: 20789809.9
(22) Date de dépôt: 20.10.2020
(51) Int. Cl.: G01M 3/32

(54) **SYSTEME DE DETECTION DE FUITES ET METHODE ASSOCIEE**
SYSTEM ZUM DETEKTIEREN VON LECKS UND ZUGEHÖRIGES VERFAHREN
SYSTEM FOR DETECTING LEAKS AND ASSOCIATED METHOD

(30) Priorité: 22.10.2019 FR 1911821
(43) Date de publication de la demande: 31.08.2022
(73) Titulaire: ATEQ, 78340 Les Clayes-sous-Bois (FR)
(72) Inventeur: DEWAILLY, Guy, Livonia, Michigan MI 48150 (US)
(74) Mandataire: Vidon Brevets & Stratégie
(86) Numéro de dépôt international: PCT/EP2020/079527
(87) Numéro de publication internationale: WO 2021/078756

(56) Documents cités:
- US-A- 5 495 748
- US-A1- 2003 019 281
- US-A1- 2004 177 676
- US-A1- 2013 031 962

## Description

La présente invention se rapporte au domaine des systèmes de détection de fuites ou de mesure d'étanchéité, plus particulièrement des systèmes de détection de fuites basés sur la mesure d'une grandeur physique, telle qu'une pression ou un débit, relative à un niveau de fuite.

En effet, il est nécessaire de pouvoir vérifier l'intégrité de produits et/ou de vérifier si ceux-ci présentent une fuite et de pouvoir la quantifier. Les produits/pièces à tester sont par exemple des appareils électroniques, des pièces mécaniques, des contenants, etc.

L'étanchéité est une caractéristique critique dans le cadre de produits subissant des contraintes extérieures difficiles et devant répondre à des exigences de fonctionnement particulières, comme celui d'être étanche aux liquides (tels qu'à l'eau), ne pas présenter de fuites pouvant dégrader les performances du produit, etc.

Plus particulièrement, il y a une typologie particulière de produits dont certaines parties doivent présenter un certain niveau d'étanchéité (par exemple rester étanche à 1m de profondeur) alors que d'autres parties ne sont pas étanches (d'autant plus quand ces produits ne sont pas testés dans une position d'utilisation/montée, mais en tant que tels).

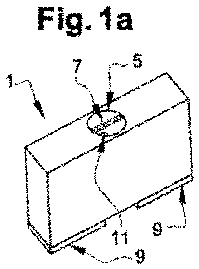

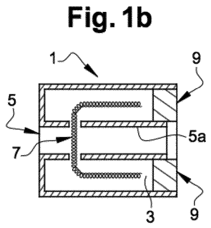

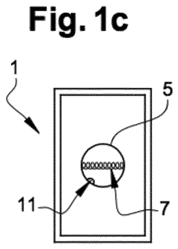

On peut ainsi considérer deux exemples particuliers donnés ici seulement à titre d'exemples indicatifs :
- les appareils électroniques, tels que les smartphones, tablettes, montres connectées, etc., qui doivent présenter un certain niveau d'étanchéité aux liquides (tels que l'eau), mais qui comportent également une zone perméable, telle qu'une ouverture faisant communiquer l'intérieur et l'extérieur de l'appareil, afin de garder l'intérieur de l'appareil à la pression atmosphérique, ladite ouverture étant généralement obturée par une membrane perméable aux gaz et étanche aux liquides (par exemple une membrane en Gore-Tex^{®}).
- les cartouches de liquide pour cigarettes électroniques (ou e-cigarettes), un exemple très schématique d'une cartouche de cigarette électronique étant représenté aux figures 1a à 1c, respectivement en perspective, en coupe et de face, sur lesquelles on peut voir que la cartouche 1 comprend un réservoir 3 destiné à stocker un liquide, un tube d'aspiration 5 traversant ladite cartouche 1 et étant entouré par ledit réservoir 3, ainsi qu'une mèche 7 qui est disposée en travers du tube d'aspiration 5 et dont les extrémités sont situées dans ledit réservoir 3.

Par ailleurs, le réservoir 3 est généralement délimité par une paroi et un moyen d'obturation 9, tel qu'un bouchon en caoutchouc, venant fermer le réservoir 3 après remplissage. On notera que le tube d'aspiration 5 de la cartouche 1 est réalisé par pliage d'une feuille métallique, sur laquelle il est nécessaire de réaliser une soudure 11 pour finaliser ledit tube 5, soudure généralement à l'intérieur du tube d'aspiration 5 (le long de la paroi délimitant l'intérieur dudit tube). Par ailleurs, pour que les extrémités de la mèche 7 soient dans le réservoir 3, des ouvertures sont aménagées dans la paroi 5a du tube d'aspiration 5 pour que ladite mèche 7 trempe dans le liquide et que ce dernier en imprègne la mèche 7.

Une cartouche de cigarette électronique doit ainsi présenter une bonne étanchéité au niveau des éléments délimitant le réservoir (tels que la paroi externe et le moyen d'obturation) tout en comportant une zone perméable au niveau du tube d'aspiration (en raison des ouvertures par laquelle la mèche est insérée dans le réservoir).

Ainsi, ces pièces, par leur conception même, présentent une zone perméable, zone permettant une communication entre l'intérieur et l'extérieur de la pièce. Ladite zone perméable peut également être assimilée à une fuite supérieure (voire très supérieure par exemple d'un ordre 100) à la fuite qu'on cherche à déterminer dans une autre zone de la pièce (dans les exemples ci-dessus, les parois externes desdits objets).

On notera qu'on entend par « zone perméable », une zone qui peut être au moins traversée par un liquide (tel que de l'eau) et/ou un gaz (tel que de l'air).

Pour ce type de produit, la méthode usuellement utilisée pour tester l'étanchéité d'une pièce est la méthode dite des « composants scellés ».

Cette méthode consiste, dans un premier temps, à fermer hermétiquement la pièce à tester, par exemple en obturant les extrémités du tube d'aspiration pour la cartouche ou la membrane perméable aux gaz pour l'appareil électronique.

Puis, par la suite, on dispose la pièce obturée à tester dans une chambre de test, on fait varier la pression de manière contrôlée dans la chambre de test (par exemple par l'injection d'un gaz, tel que de l'air), et on mesure une variation de pression après une durée prédéterminée. En effet, si le volume accessible est supérieur au volume de la chambre de test auquel on soustrait le volume de la pièce à tester, il y a alors une variation de la pression du gaz qui reflète le volume effectivement accessible audit gaz (c'est-à-dire le volume de la chambre de test et au moins une partie du volume interne de la pièce si celle-ci n'est pas étanche).

Cependant, avec cette méthode, il est nécessaire de procéder à des cycles de test d'apprentissage avec une pièce dont l'étanchéité est satisfaisante pour pouvoir discriminer par la suite des pièces étanches de celles présentant des fuites et/ou de faire une mesure différentielle (c'est-à-dire de comparer la pression dans deux chambres de test, l'une contenant la pièce à tester et l'autre une pièce considérée comme « bonne »).

Cette méthode présente ainsi l'inconvénient de nécessiter un certain savoir-faire de la part de l'opérateur afin d'étalonner correctement le système de détection de fuites et/ou d'obturer correctement les pièces à tester.

Par ailleurs, cette méthode peut être difficile à mettre en œuvre lorsque la détection de fuites s'effectue sur des pièces présentant de petits volumes internes, pour des fuites faibles et/ou pour des pièces dont la rigidité (ou flexibilité) fausse les résultats (la déformation de la pièce causée par une variation de pression pouvant induire des erreurs sur le résultat de la mesure de fuite).

On constate donc la nécessité d'avoir un dispositif et une méthode de détection de fuites permettant de vérifier l'étanchéité d'une pièce, alors que ces pièces présentent des zones perméables du fait de leurs fonctions spécifiques.

La présente invention est particulièrement avantageuse dans la détection de fuites sur des pièces présentant une zone perméable, zone qui fait communiquer au moins une partie interne de la pièce avec l'extérieur.

Ainsi, la présente invention résout au moins en partie les problèmes ci-dessus en proposant un nouveau type de système de détection de fuites pour pièce présentant une zone perméable selon la revendication 1.

La présence d'un conduit en communication avec la zone de la pièce présentant une zone perméable permet de mieux isoler la pièce à tester de la chambre de test, rendant le test d'étanchéité plus simple et plus répétable, notamment en évitant la nécessité de procéder à des cycles de test d'apprentissage sur des pièces considérées comme étanches (et donc d'éviter d'avoir à utiliser la méthode des « composants scellés »).

Il est avantageux que le conduit principal soit aménagé dans une pièce distincte et amovible, celle-ci étant plus facile à adapter en fonction du type de pièce à tester.

Ainsi, pour un appareil électronique, tel qu'une tablette, le conduit principal est positionné pour communiquer avec l'ouverture comprenant une membrane perméable aux gaz et lesdits joints sont positionnés au niveau des parois de l'insert venant en appui contre la pièce à tester (on notera également que des joints peuvent être disposés au niveau de la paroi de la chambre où traverse l'insert), tandis que pour une cartouche de cigarette électronique, l'insert est inséré dans le tube d'aspiration et les joints positionnés contre les parois du tube d'aspiration.

L'intérêt d'avoir au moins deux joints est d'autant plus critique que la zone de contact avec les joints peut présenter une surface irrégulière, comme cela est le cas avec les cartouches de cigarette électronique dans lesquelles le tube d'aspiration présente une soudure le long dudit tube.

En effet, sans la présence desdits joints, la fuite mesurée pourrait être une fuite au niveau du joint et non une fuite propre à la pièce à tester.

On notera également que lorsqu'on cherche à mesurer des fuites très petites avec des temps de test courts, il est avantageux de minimiser la variation du volume où l'on mesure la grandeur physique représentative d'une fuite (variation de volume par exemple due au déplacement du joint sous l'effet d'une différence de pression entre les deux faces du joint).

La présence d'un conduit secondaire permet de faire varier la pression régnant entre les deux joints, afin de limiter le déplacement du joint en contact avec le volume de test et/ou de tester un niveau de fuite au niveau dudit joint. On notera que l'espace entre les deux joints est également désigné ci-après sous le terme de « volume interjoint ».

Selon une autre caractéristique possible, le dispositif apte à faire varier la pression dans la chambre de test est configuré pour faire varier la pression selon une rampe de pression (c.-à-d. selon une variation de la pression par unité de temps).

En effet, les fuites à détecter et à mesurer peuvent être liées à des éléments présentant des comportements non linéaires, c'est-à-dire qu'une pièce peut ne pas présenter de fuite à une pression donnée et présenter une fuite pour une autre pression. Il est ainsi avantageux de faire varier la pression de test sur un intervalle de pression donnée pour optimiser la possible détection de fuites (par exemple une variation de 5 bars en 10 secondes). La variation de la pression, notamment dans la chambre de test, est de préférence linéaire et continue, mais cela peut être également une succession de plateaux de pression.

Selon une autre caractéristique possible, la pièce à tester est un appareil électronique présentant une ouverture obturée par une membrane perméable aux gaz (tels que l'air) et étanche aux liquides (tels que de l'eau).

Selon une autre caractéristique possible, la pièce à tester est une cartouche de liquide pour cigarette électronique comportant un réservoir de liquide, un tube d'aspiration et une mèche disposée en travers dudit tube et dont au moins une des extrémités est située dans ledit réservoir.

Selon une autre caractéristique possible, ledit appareil de mesure comprend un capteur de pression différentielle. Ledit capteur différentiel permet notamment de faire des mesures d'étanchéité en comparant une pièce à tester à une pièce de référence, cela permet de s'affranchir partiellement d'effets parasites dus à l'environnement dans lequel le test est effectué.

Selon une autre caractéristique possible, la détection de fuites est réalisée par l'intermédiaire du conduit principal.

Il est avantageux d'utiliser le conduit principal pour la mesure d'une grandeur physique relative à une fuite, car cela simplifie le montage et évite de prévoir un autre point de mesure dans la chambre de test.

Par ailleurs, le système selon l'invention étant destiné à détecter des niveaux de fuite très petits devant la fuite intrinsèque (au niveau de la zone perméable) à la pièce à tester, cela n'est pas un problème d'avoir un niveau de fuite mesurable borné par le niveau de fuite de la zone perméable.

La présente invention concerne également une nouvelle méthode de détection de fuites pour un dispositif tel que décrit ci-dessus, dans lequel le premier joint isole l'intérieur de la pièce à tester du volume interjoint, le deuxième joint isolant le volume interjoint de l'extérieur de la pièce à tester,
caractérisée en qu'elle comprend les étapes suivantes :
- établir une première pression similaire dans la chambre de test et le volume interjoint ;
- déterminer un premier niveau de fuite ;
- établir, dans le volume interjoint, une deuxième pression similaire à la pression du conduit principal de l'insert ;
- déterminer un deuxième niveau de fuite ;
- déterminer un niveau de fuite de la pièce en se basant sur les premier et deuxième niveaux de fuite.

Selon une caractéristique possible, ladite méthode comporte une étape de détermination d'un facteur de correction de fuite (par exemple lié au premier joint).

Le facteur de correction de fuite sert à corriger la valeur du premier niveau de fuite.

Selon une autre caractéristique possible, si la valeur du facteur de correction est inférieure à une valeur prédéterminée, alors la mesure du premier niveau de fuite est déclarée valide.

Selon une autre caractéristique possible, si la valeur du facteur de correction est supérieure à une valeur prédéterminée, alors une alerte se déclenche.

Selon une autre caractéristique possible, le premier niveau et/ou le deuxième niveau de fuites sont déterminés sur la base d'au moins un intervalle de pression, tel qu'une rampe de pression.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
[Fig. 1a] est une représentation très schématique d'une cartouche de liquide pour cigarette électronique ;
[Fig. 1b] est une représentation très schématique d'une cartouche de liquide pour cigarette électronique ;
[Fig. 1c] est une représentation très schématique d'une cartouche de liquide pour cigarette électronique ;
[Fig. 2] est une représentation très schématique du système de détection selon l'invention dans un premier exemple d'application ;
[Fig. 3] est une vue agrandie d'une sous partie du système de la figure 2 ;
[Fig. 4a] est une représentation très schématique du système de détection selon l'invention dans un deuxième exemple d'application ;
[Fig. 4b] est une vue très schématique agrandie d'une partie du système de la figure 4a.

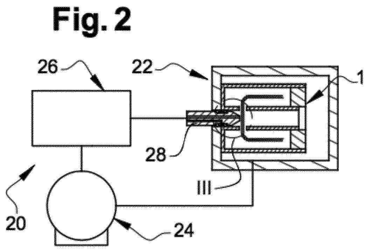

La figure 2 est une représentation très schématique d'un système 20 de détection selon l'invention dans un premier exemple d'application, dans lequel ledit système 20 de détection de fuites est utilisé sur une cartouche 1 telle que décrite précédemment en relation avec les figures 1a à 1c.

Ledit système 20 comprend ainsi :
- une chambre de test 22 configurée pour accueillir la pièce à tester, ici ladite cartouche 1 (très schématiquement représentée) ;
- un dispositif 24 apte à faire varier la pression dans la chambre de test 22 ;
- un appareil de mesure 26 d'une grandeur physique représentative du niveau de fuite, tel qu'un manomètre ou un débitmètre ;
- un insert 28 (ou pièce de liaison) configuré pour coopérer avec la zone de la cartouche 1 comportant une zone perméable.

L'insert 28 est donc inséré dans le tube d'aspiration 5 de la cartouche 1 par l'une des extrémités dudit tube, tandis que l'autre extrémité du tube est obturée par un moyen d'obturation, tel qu'un bouchon.

Comme plus particulièrement illustré à la figure 2, ledit insert 28 comporte ainsi au moins un conduit principal 30 dont une extrémité 30a communique avec la zone perméable de la pièce, tandis que l'autre extrémité 30b débouche hors de la chambre de test 22.
Plus particulièrement, le conduit principal 30 débouche dans le tube d'aspiration 5 de la cartouche de préférence à proximité de la mèche 7 de la cartouche 1, et donc des ouvertures aménagées dans la paroi 5a délimitant ledit tube 5 et communiquant avec le réservoir 3 (donc au niveau de la zone de la pièce qui est perméable).

Ledit insert 28 comporte également :
- au moins deux joints 32a et 32b, dits premier 32a et deuxième 32b joints, configurés pour assurer l'étanchéité entre l'extérieur et la zone perméable de ladite pièce 1,
- un conduit secondaire 34 débouchant entre les deux joints ;
- un corps principal 36 dans lequel sont aménagés les conduits principal 30 et secondaire 34.

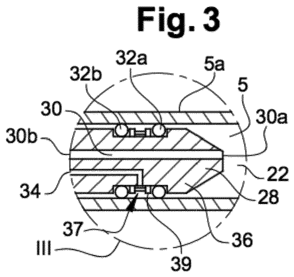

On notera que dans l'exemple représenté aux figures 2 et 3, l'insert 28 comprend deux joints 32a et 32b toriques qui sont montés sur la périphérie extérieure dudit insert 28 et disposés au contact de la paroi 5a du tube 5, mais en fonction de la structure de la pièce à tester, lesdits joints 32a, 32b peuvent être disposés différemment. L'espace délimité par lesdits joints 32a et 32b, la paroi 5a du tube d'aspiration 5 et le corps principal 36 de l'insert 28 définit un volume 37, dit volume interjoint (ledit canal secondaire 34 débouche ainsi dans le volume interjoint 37).

Le premier joint 32a de l'insert 28 isole l'intérieur de la cartouche à tester du volume interjoint 37, tandis que le deuxième joint 32b isole le volume interjoint 37 de l'extérieur.

On notera, par ailleurs, que la présence de deux joints garantit un certain niveau d'étanchéité, ceci malgré un mauvais état de surface de la paroi 5a dudit tube 5 (notamment à cause de la soudure 11).

L'insert 28 peut également comprendre un dispositif de maintien 39 des joints configurés pour maintenir, d'une part, en position les joints 32a et 32b et, d'autre part, une distance prédéterminée entre ceux-ci.

De plus, lorsqu'on veut tester le niveau d'étanchéité d'une cartouche 1, on applique une méthode de détection de fuites comprenant les étapes suivantes :
- Établir une première pression P₁ similaire dans la chambre de test 22 et le volume interjoint 37, tandis que la pression dans le tube d'aspiration 5 est par exemple maintenue à pression atmosphérique (ceci peut être fait simplement par l'intermédiaire du conduit principal 30 débouchant à l'extérieur de la chambre de test 22 et une vanne).
- Déterminer un premier niveau de fuite F₁, cette détermination est réalisée par la mesure de la variation d'une grandeur physique en fonction du temps, telle qu'une variation de pression dans la chambre de test ou au niveau du tube d'aspiration 5 (par exemple par l'intermédiaire du conduit principal de l'insert).
- Établir une deuxième pression P₂ dans le volume interjoint 37 et dans la zone de la pièce à tester présentant une fuite contrôlée, ici l'intérieur du tube d'aspiration 5 de la cartouche 1 (cela limite par ailleurs le déplacement du premier joint 32) ; on notera que la deuxième pression P₂ est par exemple égale à la pression atmosphérique.
- Déterminer un deuxième niveau de fuite F₂ ; comme précédemment cette détermination est réalisée par la mesure de la variation d'une grandeur physique en fonction du temps, tel qu'une variation de pression dans la chambre de test 22 ou au niveau du tube d'aspiration 5 par l'intermédiaire de l'insert 28.
- Déterminer un niveau de fuite de la pièce F_{P} en se basant sur les premier F₁ et deuxième F₂ niveaux de fuite précédemment déterminés.

Ainsi, le premier niveau de fuite F₁ déterminé inclut possiblement la mesure d'une fuite liée à une mauvaise étanchéité au niveau des joints 32a et 32b, notamment du premier joint 32a, ainsi que d'autres phénomènes incontrôlés, déplacements des joints, variation de température, etc.

Tandis que le deuxième niveau d'étanchéité F₂ déterminé mesure une fuite qui n'inclut pas la fuite au niveau du premier joint 32a.

Lors de la détermination du niveau de fuite, ladite méthode peut également comprendre une étape de détermination d'un facteur de correction de fuite servant à corriger la valeur du premier niveau de fuite F₁ (par exemple lié à une fuite au niveau du premier joint).

Selon la valeur de ce facteur de correction, par exemple si la valeur du premier niveau de fuite n'est pas modifiée de plus de 5%, la mesure du premier niveau de fuite F₁ est déclarée valide et est donc considérée comme représentative du niveau d'étanchéité de la pièce testée.

Si le facteur de correction est supérieur à une valeur prédéterminée, une alerte se déclenche, indiquant à l'utilisateur qu'il y a un problème dans la détection de fuites réalisée, par exemple que le ou les joints sont abîmés ou mal positionnés et qu'ils doivent être mieux disposés ou changés.

La présente méthode de détection peut également comprendre une étape complémentaire dans laquelle le facteur de correction est utilisé pour calculer un niveau de fuite corrigé F₁' (ledit facteur de correction étant appliqué au premier niveau de fuite F₁), permettant ainsi à l'opérateur/utilisateur d'être informé si la pièce testée répond aux critères d'étanchéité demandés.

On notera par ailleurs que la présente méthode peut être réalisée avec un ensemble de valeurs discrètes de pression ou avec des intervalles de pression (ou rampes de pression).

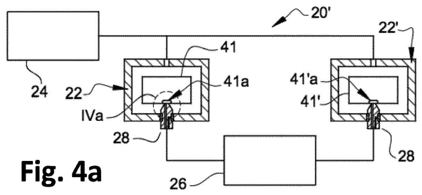

La figure 4a, quant à elle, illustre un système de détection de fuites selon l'invention dans un deuxième exemple d'application, dans lequel le système 20' de détection de fuites est utilisé sur un appareil électronique 41, 41' présentant une zone perméable, telle qu'une ouverture obturée 41a, 41a' par une membrane perméable aux gaz et étanche aux liquides (par exemple une membrane Gore-Tex^{®} qui est perméable à l'air et étanche à l'eau).

On notera que les mêmes références ont été utilisées pour désigner les éléments similaires.

Ledit système 20' comprend ainsi :
- des première 22 et deuxième chambres de test 22' configurées pour accueillir respectivement une pièce à tester 41 et une pièce de référence 41', ici des appareils électroniques ;
- un dispositif 24 apte à faire varier la pression dans lesdites chambres de test 22, 22' ;
- un appareil de mesure 26 d'une grandeur physique représentative du niveau de fuite (tel qu'un manomètre ou un débitmètre) ;
- des inserts 28 coopérant respectivement avec chacune des zones des appareils électroniques comportant une zone perméable, ici l'ouverture obturée 41a, 41a' par une membrane.

Comme précédemment, chacun desdits inserts 28 présente un conduit principal dont une extrémité communique avec la zone perméable 41a, 41a' de la pièce 41, 41', tandis que l'autre extrémité débouche hors de la chambre de test 22, 22'.

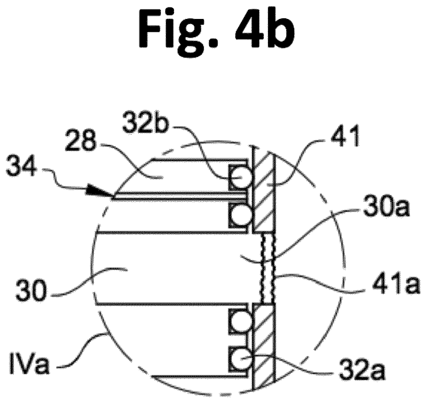

On notera ainsi que chacun desdits inserts 28 présente sensiblement la même structure que celle décrite ci-dessus en relation avec les figures 2 et 3, à la différence que lorsque ledit insert 28 présente deux joints 32a et 32b, lesdits joints 32a et 32b sont disposés au niveau des parois des chambres de test 22 et 22' et/ou entre les parois de l'insert 28 et la paroi entourant la zone perméable 41a, 41a' de la pièce 41, 41'. Cette dernière configuration est plus particulièrement illustrée à la figure 4b qui est une vue très schématique et agrandie de la zone de contact entre le conduit principal 30 de l'insert 28 et la zone perméable 41a.

L'appareil de mesure 26 d'une grandeur physique représentative du niveau de fuite comprend un capteur de pression différentielle et est relié à chacun des inserts 28, plus particulièrement par l'intermédiaire des conduits principaux 30 des inserts 28.

La détection de fuite qui s'effectue sur la pièce à tester peut ainsi s'effectuer de la même manière que la méthode décrite précédemment.

Cependant, la méthode de détection de fuites est avantageusement réalisée par une comparaison de l'évolution d'une grandeur physique représentative du niveau fuite (tel qu'une pression ou un débit) entre une pièce à tester 41' et une pièce de référence 41, ceci permettant de s'affranchir de variations liées à l'environnement.

Néanmoins, dans une variante de réalisation non représentée, la détection de fuites sur un appareil électronique peut être réalisée sans pièce de référence comme dans le cadre de la première application décrite ci-dessus.

De façon avantageuse, la première pression P₁ et/ou la deuxième pression P₂ peuvent être des intervalles de pression et plus particulièrement des rampes de pression (c'est-à-dire une variation de la pression par unité de temps), de préférence continue et linéaire. Cette variation de la pression au cours de temps peut être également une succession de plateaux de pression.

## Revendications

1. Système (20 ; 20') de détection de fuites pour une pièce présentant une zone perméable, ledit système comprenant :
- une chambre de test (22, 22') configurée pour accueillir la pièce à tester ;
- un dispositif (24) apte à faire varier la pression de test dans la chambre de test et/ou dans la pièce à tester ;
- un appareil de mesure (26) d'une grandeur physique représentative du niveau de fuite comprenant un capteur de pression différentielle ;
- un insert (28) configuré pour coopérer avec la zone perméable de la pièce à tester ;
ledit système (20 ; 20') comprenant un conduit principal (30) aménagé dans ledit insert (28), ledit conduit principal (30) présentant une extrémité (30a) qui communique avec la zone perméable, tandis que l'autre extrémité (30b) dudit conduit principal (30) débouche hors de la chambre de test (22 ; 22'), **caractérisé en ce que** ledit insert (28) comprend en outre deux joints (32a, 32b) configurés pour assurer l'étanchéité entre l'extérieur et la zone perméable de la pièce à tester et définissant entre eux un volume interjoint (37), et **en ce que** ledit insert (28) comprend en outre un conduit secondaire débouchant entre les deux joints (32a, 32b) pour faire varier la pression de test entre les deux joints (32a, 32b) par le biais dudit dispositif (24).

2. Système selon la revendication 1, **caractérisé en ce que** le dispositif (24) apte à faire varier la pression dans la chambre de test (22) et/ou dans la pièce à tester est configuré pour faire varier la pression selon une rampe de pression.

3. Système selon les revendications 1 et 2, **caractérisé en ce que** la détection de fuites est réalisée par l'intermédiaire du conduit principal (30) reliant l'appareil de mesure (26) audit insert (28).

4. Méthode de détection de fuites pour une pièce présentant une zone perméable mise en œuvre par un système selon l'une quelconque des revendications précédentes, le premier joint (32a) isolant la pièce à tester du volume interjoint (37), le deuxième joint (32b) isolant le volume interjoint (37) de l'extérieur de la pièce à tester, caractérisée en qu'elle comprend les étapes suivantes :
- établir au moins une première pression (P₁) similaire dans la chambre de test (22 ; 22') et le volume interjoint (37) ;
- déterminer, via l'appareil de mesure (26), un premier niveau de fuite (F₁), par la mesure de la variation de la première pression (P1) en fonction du temps ;
- établir, dans le volume interjoint (37) et dans la zone perméable de la pièce à tester, au moins une deuxième pression (P₂) ;
- déterminer, via l'appareil de mesure (26), un deuxième niveau de fuite (F₂), par la mesure de la variation de la deuxième pression (P₂) en fonction du temps ;
- déterminer un niveau de fuite de la pièce (F_{P}) en se basant sur les premier (F₁) et deuxième (F₂) niveaux de fuite.

5. Méthode selon la revendication précédente, **caractérisée en ce qu'**il y a une étape de détermination d'un facteur de correction de fuite.

6. Méthode selon la revendication 4 ou 5, **caractérisée en ce que** le premier niveau (F₁) et/ou le deuxième niveau (F₂) de fuites sont déterminés sur la base d'au moins un intervalle de pression.

## Patentansprüche

1. System (20; 20') zur Lecksuche für ein Teil mit einem durchlässigen Bereich, wobei das System umfasst:
- eine Prüfkammer (22,22'), die dazu eingerichtet ist, um das zu prüfende Teil aufzunehmen;
- eine Vorrichtung (24), die dazu geeignet ist, um den Prüfdruck in der Prüfkammer und/oder in dem zu prüfenden Teil zu verändern;
- ein Gerät (26) zur Messung einer für das Leckniveau repräsentativen physikalischen Größe, das einen Differenzdrucksensor umfasst;
- einen Einsatz (28), der dazu eingerichtet ist, um mit der durchlässigen Zone des zu prüfenden Teils zusammenzuwirken;
wobei das System (20;20') eine in dem Einsatz (28) angeordnete Hauptleitung (30) umfasst, wobei die Hauptleitung (30) ein Ende (30a) hat, das mit der durchlässigen Zone in Verbindung steht, während das andere Ende (30b) der Hauptleitung (30) außerhalb der Prüfkammer (22,22') mündet,
**dadurch gekennzeichnet, dass** der Einsatz (28) außerdem zwei Dichtungen (32a, 32b) umfasst, die dazu eingerichtet sind, um die Dichtigkeit zwischen der Umgebung und dem durchlässigen Bereich des zu prüfenden Teils sicherzustellen und die dazwischen ein Zwischenvolumen (37) definieren, und dass der Einsatz (28) außerdem eine sekundäre Leitung umfasst, die zwischen den beiden Dichtungen (32a, 32b) mündet, um den Prüfdruck zwischen den beiden Dichtungen (32a, 32b) mittels der Vorrichtung (24) zu verändern.

2. System nach Anspruch 1, **dadurch gekennzeichnet, dass** die Vorrichtung (24), die geeignet ist, um den Druck in der Prüfkammer (22) und/oder in dem zu prüfenden Teil zu verändern, dazu eingerichtet ist, um den Druck entlang einer Druckrampe zu verändern.

3. System nach Anspruch 1 und 2, **dadurch gekennzeichnet, dass** die Lecksuche über die Hauptleitung (30) erfolgt, die das Messgerät (26) mit dem Einsatz (28) verbindet.

4. Verfahren zur Lecksuche für ein Teil mit einem durchlässigen Bereich, das durch ein System nach einem der vorhergehenden Ansprüche implementiert wird, wobei die erste Dichtung (32a) das zu prüfende Teil von dem Zwischenvolumen (37) isoliert, wobei die zweite Dichtung (32b) das Zwischenvolumen (37) von der Umgebung des zu prüfenden Teils isoliert,
**dadurch gekennzeichnet, dass** es die folgenden Schritte umfasst:
- Herstellen mindestens eines ähnlichen ersten Drucks (P₁) in der Prüfkammer (22; 22') und dem Zwischenvolumen (37);
- Ermitteln, über das Messgerät (26), eines ersten Leckniveaus (F₁) durch die Messung der Änderung des ersten Drucks (P₁) als Funktion der Zeit;
- Herstellen wenigstens eines zweiten Drucks (P₂) in dem Zwischenvolumen (37) und in dem durchlässigen Bereich des zu prüfenden Teils;
- Ermitteln, über das Messgerät (26), eines zweiten Leckniveaus (F₂) durch Messung der Änderung des zweiten Drucks (P₂) als Funktion der Zeit;
- Ermitteln eines Leckniveaus des Teils (Fₚ) auf der Grundlage des ersten (F₁) und zweiten (F₂) Leckniveaus.

5. Verfahren nach dem vorhergehenden Anspruch, **dadurch gekennzeichnet, dass** es einen Schritt zur Bestimmung eines Leckage-Korrekturfaktors gibt.

6. Verfahren nach Anspruch 4 oder 5, **dadurch gekennzeichnet, dass** das erste (F₁) und/oder das zweite (F₂) Leckniveau auf der Grundlage von mindestens einem Druckintervall ermittelt werden.

## Claims

1. System (20; 20') for detecting leaks for a part having a permeable zone, said system comprising:
- a test chamber (22, 22') configured to receive the part to be tested;
- a device (24) suitable for varying the pressure in the test chamber and/or in the part to be tested;
- a measuring device (26) for measuring a physical quantity representative of the leak level comprising a differential pressure sensor;
- an insert (28) configured to cooperate with the permeable zone of the part to be tested;
said system (20; 20') comprises a main pipe (30) arranged in said insert (28), said main pipe (30) having one end (30a) which communicates with the permeable zone, while the other end (30b) of said main pipe (30) opens outside the test chamber (22; 22'),
**characterised in that** said insert (28) further comprises two seals (32a, 32b) configured to ensure tightness between the outside and the permeable zone of the part to be tested and defining between them an inter-seal volume (37), and **in that** said insert (28) further comprises a secondary conduit opening between the two seals (32a, 32b) to vary the test pressure between the two seals (32a, 32b) by the bias of the device (24).

2. System according to claim 1, **characterised in that** the device (24) suitable for varying the pressure in the test chamber (22) and/or in the part to be tested is configured to vary the pressure according to a pressure gradient.

3. System according to claim 1 and 2, **characterised in that** leak detection is performed by means of the main pipe (30) connecting the measuring device (26) to said insert (28).

4. Leak detection method for part having a permeable zone implemented by a system according to any one of the preceding claims, the first seal (32a) isolating the part to be tested from the inter-seal volume (37), the second seal (32b) isolating the inter-seal volume (37) from the outside of the part to be tested,
**characterised in that** it comprises the following steps:
- establishing at least one similar first pressure (P₁) in the test chamber (22; 22') and the inter-seal volume (37);
- determining, via the measuring device (26) a first leak level (F₁), by measuring the variation of the first pressure (P₁) in function of time;
- establishing, in the inter-seal volume (37) and in the permeable zone of the part to be tested, at least a second pressure (P₂);
- determining, via the measuring device (26), a second leak level (F₂), by measuring the variation of the second pressure (P₂) in function of time;
- determining a leak level of the part (Fₚ) based on the first (F₁) and second (F₂) leak levels.

5. Method according to preceding claim, **characterised in that** there is a step of determining a leak correction factor.

6. Method according to claim 4 or 5, **characterised in that** the first leak level (F₁) and/or the second leak level (F₂) are determined based on at least one pressure interval.
